# EUROPÄISCHE PATENTSCHRIFT

(11) **EP 3 887 710 B1**
(45) Veröffentlichungstag und Bekanntmachung des Hinweises auf die Patenterteilung: **10.01.2024**
(21) Anmeldenummer: 19816562.3
(22) Anmeldetag: 28.11.2019
(51) Int. Cl.: F17C 1/06, F17C 1/14

(54) **HERSTELLUNGSVERFAHREN FÜR EINEN WASSERSTOFF-DRUCKBEHÄLTER, DRUCKBEHÄLTER SOWIE KRAFTFAHRZEUG MIT EINEM WASSERSTOFF-DRUCKBEHÄLTER**
METHOD FOR PRODUCING A HYDROGEN PRESSURE VESSEL, PRESSURE VESSEL, AND MOTOR VEHICLE HAVING A HYDROGEN PRESSURE VESSEL
PROCÉDÉ DE PRODUCTION D'UN CONTENANT SOUS PRESSION D'HYDROGÈNE, ET VÉHICULE AUTOMOBILE ÉQUIPÉ D'UN CONTENANT SOUS PRESSION D'HYDROGÈNE

(30) Priorität: 30.11.2018 DE 102018220655
(43) Veröffentlichungstag der Anmeldung: 06.10.2021
(73) Patentinhaber: Robert Bosch GmbH, 70442 Stuttgart (DE)
(72) Erfinder: MUEHLEDER, Friedrich, 75417 Muehlacker (DE); BAHROUN, Karim, 72663 Grossbettlingen (DE); BEHM, Henrik Wolfgang, 70469 Stuttgart (DE)
(86) Internationale Anmeldenummer: PCT/EP2019/082835
(87) Internationale Veröffentlichungsnummer: WO 2020/109438

(56) Entgegenhaltungen:
- WO-A1-02/088593
- JP-A- 2003 232 495
- JP-A- 2005 090 651
- US-A1- 2010 015 498

## Beschreibung

Die Erfindung betrifft ein Verfahren zum Herstellen eines Wasserstoff-Druckbehälters.

Ferner betrifft die Erfindung einen Wasserstoff-Druckbehälter.

Weiterhin betrifft die Erfindung ein Kraftfahrzeug mit einem Wasserstoff-Druckbehälter.

### Stand der Technik

Wasserstoff-Druckbehälter sind aus dem Stand der Technik bereits bekannt.

Druckgefäße aus Stahl und mit einer Materialpaarung aus Stahl und entweder carbonfaserverstärktem Kunststoff (CFK), Aluminium-CFK oder Kunststoff-CFK zur Druckspeicherung von Wasserstoff bei bis zu 700 bar oder eine Speicherung von Wasserstoff unter Einsatz und/oder in der Form eines Metallhydrids sind ebenfalls aus dem Stand der Technik bekannt, wie beispielsweise aus der deutschen Offenlegungsschrift DE 10 2013 113 208 A1. WO 02/088593 A1 offenbart einen gasdichten Behälter.

### Offenbarung der Erfindung

Die vorliegende Erfindung stellt einen Wasserstoff-Druckbehälter durch das Verfahren des Anspruchs 1 zur Verfügung, welcher gegenüber den aus dem Stand der Technik bekannten Wasserstoff-Druckbehältern den Vorteil aufweist, dass er geringere Kosten und darüber hinaus einen geringeren Wasserstoffverlust gegenüber Wasserstoff-Druckbehältern aus carbonfaserverstärktem Kunststoff/glasfaserverstärktem Kunststoff nach Stand der Technik aufweist. Ferner wird eine hohe Druckfestigkeit, mindestens 700 bar Innendruck, in Verbindung mit einem hohen Speichervolumen bereitgestellt. Im Übrigen weist der Wasserstoff-Druckbehälter gemäß der Erfindung ein geringeres Gewicht gegenüber Wasserstoff-Druckbehältern nach Stand der Technik auf. Auch wird das Problem der wiederholt auftretenden Materialdehnung aufgrund der beim Befüllen und Entleeren von Wasserstoff-Tanks auftretenden hohen Belastungen durch die besonders vorteilhafte Kombination aus hochdichten Sperrschichten und dehnbaren Zwischenschichten gelöst. Durch einfache konstruktive Maßnahmen werden die zuvor beschriebenen Probleme gelöst, ohne dass dabei nennenswert Nachteile auftreten. Gemäß der Erfindung sind folgende Schritte vorgesehen:
a) Bereitstellen eines metallischen Behälters, insbesondere mit einer zylindrischen oder kugelförmigen Form, mit einer Innenseite und einer Au ßenseite,
b) Ausbildung einer sauerstoffhaltigen Oxidschicht auf der Innenseite des Behälters mittels Oberflächen-Behandlung mit einem Sauerstoffplasma und/oder mittels Oberflächen-Wärme-Behandlung unter sauerstoffhaltiger Atmosphäre,
c) Beschichten der in Verfahrensschritt b) ausgebildeten Oxidschicht der Innenseite des metallischen Behälters mit einer Diffusions-Sperrschicht in einem Niederdruckverfahren, insbesondere bei einem Druck von 0,1 bis 100 Pa, bevorzugt von 0,1 bis 10 Pa,
   wobei die in Verfahrensschritt c) durch Beschichtung erhaltene Diffusions-Sperrschicht entweder
   - als ein alternierender Schichtaufbau aus mindestens einer dehnbaren Zwischenschicht und mindestens einer hochdichten Sperrschicht oder
   - als eine Gradientenschicht, wobei die Gradientenschicht einen, vorzugsweise kontinuierlichen, Gradienten von einem dehnbaren Material zu einem hochdichten Material aufweist, wobei vorzugsweise der Gradient auf der gemäß Verfahrensschritt b) ausgebildeten Oxidschicht mit einem hochdichten Material beginnt und mit einem dehnbaren Material endet, oder besonders bevorzugt auf der ausgebildeten Oxidschicht mit einem hochdichten Material beginnt, zu einem dehnbaren Material übergeht und mit einem hochdichten Material endet, ausgebildet wird,
   und wobei der metallische Behälter als Prozessreaktor, Gegenelektrode und Substrat in dem Niederdruckverfahren verwendet wird,
d) Erhalt des Wasserstoff-Druckbehälters.

Das Verfahren zur Herstellung des Wasserstoff-Druckbehälters gemäß der vorliegenden Erfindung zeichnet sich besonders dadurch aus, dass bei einem geringen Gewicht und geringen Kosten ein Wasserstoffverlust während einer Speicherung von Wasserstoff in dem Wasserstoff-Druckbehälter gemäß der Erfindung geringgehalten werden kann, wobei der Wasserstoff-Druckbehälter dabei eine hohe Druckfestigkeit von über 700 bar Innendruck einhergehend mit einem hohen Speichervolumen aufweist. Insbesondere wird der geringe Wasserstoffverlust, bedingt durch eine geringe Wasserstoffpermeabilität des Wasserstoff-Druckbehälters gemäß der Erfindung, durch den Einsatz eines metallischen Grundmaterials des metallischen Behälters in Kombination mit einer Innenbeschichtung erzielt. Durch die innenliegende Beschichtung wird erreicht, dass eine Verringerung einer wasserstoffbedingten Schädigung des Grundmaterials auftritt. Mit anderen Worten wird durch die innenliegende Diffusions-Sperrschicht eine geringere Absorption von Wasserstoff in den metallischen Behälter erzielt. Durch die Kombination aus einem dehnbaren Material mit einem hochdichten Material und entweder einem alternierenden Schichtaufbau oder einer Gradientenschicht, wird bei den induzierten Spannungen, resultierend aus beispielsweise Betriebsdruck- und/oder Temperaturschwankungen, wobei diese Schwankungen beispielsweise beim Befüllen und Entleeren von Wasserstoff-Tanks auftreten können, eine Rissbildung in der Beschichtung vermieden. Mit anderen Worten werden durch die Kombination aus einem dehnbaren Material mit einem hochdichten Material und entweder einem alternierenden Schichtaufbau oder einer Gradientenschicht Spannungsrisse, insbesondere zwischen verschiedenen Schichten, verhindert, sodass ein Verlust einer Sperrwirkung durch die verschiedenen Schichten verhindert wird. Ferner wird durch die besonders vorteilhaft ausgebildete Gradientenschicht, welche mit einem hochdichten Material beginnt, zu einem dehnbaren Material übergeht und mit einem hochdichten Material endet, eine besonders widerstandsfähige Diffusions-Sperrschicht ausgebildet beziehungsweise geschaffen. Im Übrigen ist das

Herstellungsverfahren besonders wirtschaftlich, da der metallische Behälter als Prozessreaktor, Gegenelektrode und Substrat in dem Niederdruckverfahren mittels vorzugsweise einer Hohllanze verwendet wird. Durch eine gezielte Modifikation des für den metallischen Behälter verwendeten legierten Stahls wie auch eine besonders vorteilhafte Auswahl einer optionalen Carbon- und/oder Glasfaser-Armierung um den metallischen Behälter beziehungsweise Wasserstoff-Druckbehälter wird die Herstellung eines Wasserstoff-Druckbehälters ermöglicht, welcher unter Beachtung beziehungsweise Berücksichtigung der Betriebsanforderungen - wie beispielsweise Permeationsdichtheit, Betriebsdruck, Umgebungsbedingungen - eine Reduzierung, insbesondere signifikante Reduzierung, von Gewicht und Kosten gegenüber den aus dem Stand der Technik bekannten Wasserstoff-Druckbehälter erzielt. Des Weiteren, wie schon einmal erwähnt, kann durch die Kombination des Wasserstoff-Druckbehälters mit einer optionalen Armierung die Festigkeit des Wasserstoff-Druckbehälters weiter gesteigert werden.

In einer Weiterbildung der Erfindung ist vorgesehen, dass der in Verfahrensschritt a) bereitgestellte metallische Behälter durch eine Umformung eines metallischen Flachprodukts hergestellt und/oder erhalten wird. Dies hat insbesondere den Vorteil, dass bei der Umformung auf spezielle Anforderungen des Anwendungsfalls geachtet beziehungsweise reagiert werden kann.

Ferner ist bevorzugt vorgesehen, dass der in Verfahrensschritt a) bereitgestellt metallische Behälter mit mehreren Schichten, vorzugsweise außenliegend eine Schicht aus Carbonstahl oder niedriglegiertem Stahl und weiterhin vorzugsweise innenliegend eine Schicht aus Edelstahl, hergestellt wird. Dies hat insbesondere den Vorteil, dass auf einfache Art und Weise die Festigkeit, insbesondere gegen eine mechanische Einwirkung durch den schwankenden Wasserstoffdruck im metallischen Behälter, sowie die Resistenz gegenüber der chemischen Wirkung des Wasserstoffs auf den metallischen Behälter verbessert wird.

Weiterhin ist bevorzugt vorgesehen, dass der metallische Behälter, welche in Verfahrensschritt a) bereitgestellt wird, auf seiner Innenseite und/oder Außenseite mit einem, vorzugsweise zusätzlichen, Sperrmaterial oder einer, vorzugsweise zusätzlichen, Sperrschicht, insbesondere Diffusions-Sperrschicht, hergestellt wird, wobei die Innenseite und/oder die Außenseite vorzugsweise mehr als ein, vorzugsweise zusätzliches, Sperrmaterial oder eine, vorzugsweise zusätzliche, Sperrschicht, insbesondere Diffusions-Sperrschicht, aufweist. Dies hat insbesondere den Vorteil, dass auf einfache Art und Weise die Sperrwirkung weiter verbessert werden kann.

In einer weiteren Weiterbildung der Erfindung ist vorgesehen, dass zur Verbesserung einer Diffusionssperrwirkung ein Materialeinsatz, insbesondere metallisches Material, für den in Verfahrensschritt a) bereitgestellten metallischen Behälter erhöht wird oder erhöht ist. Dies hat den Vorteil, dass auf einfache Art und Weise eine Diffusionssperrwirkung des Wasserstoff-Druckbehälters erhöht werden kann.

Weiterhin ist bevorzugt vorgesehen, dass die mindestens eine dehnbare Zwischenschicht eine Schichtdicke von 10 bis 200 nm, bevorzugt 50 bis 150 nm, besonders bevorzugt 80 bis 120 nm, aufweist. Diese Ausführungsform hat insbesondere den Vorteil, dass durch die vorgesehenen Schichtdicken gemäß der Erfindung ein, in Bezug auf die aus dem Stand der Technik bekannten Nachteile, besonders vorteilhaft ausgestalteter Wasserstoff-Druckbehälter geschaffen werden kann.

Weiterhin ist bevorzugt vorgesehen, dass die mindestens eine hochdichte Sperrschicht eine Schichtdicke von 10 bis 30 nm, bevorzugt 15 bis 25 nm, besonders bevorzugt 18 bis 22 nm, aufweist. Diese Ausführungsform hat insbesondere den Vorteil, dass durch die vorgesehenen Schichtdicken gemäß der Erfindung ein, in Bezug auf die aus dem Stand der Technik bekannten Nachteile, besonders vorteilhaft ausgestalteter Wasserstoff-Druckbehälter geschaffen werden kann.

Weiterhin ist bevorzugt vorgesehen, dass der Schichtaufbau mit einer hochdichten Sperrschicht beginnt und der Schichtaufbau mit einer hochdichten Sperrschicht endet.

Ferner ist bevorzugt vorgesehen, dass zur Beschichtung gemäß Verfahrensschritt c) im Niederdruckverfahren, vorzugsweise mittels Hohllanze, eine Mischung aus Hexamethyldisiloxan (HMDSO) und, vorzugsweise molekularen, Sauerstoff verwendet wird, wobei vorzugsweise das Verhältnis von Hexamethyldisiloxan zu Sauerstoff 1 zu 0 bis 1 zu 4 für die dehnbare Zwischenschicht und mindestens 10 zu 1 für die hochdichte Sperrschicht beträgt. Diese Ausführungsform hat insbesondere den Vorteil, dass durch eine Anpassung des Verhältnisses zwischen Hexamethyldisiloxan und Sauerstoff während des Verfahrens variabel eingestellt werden kann, ob eine dehnbare Zwischenschicht oder eine hochdichte Sperrschicht erzeugt und/oder geschaffen werden soll.

Ferner ist bevorzugt vorgesehen, dass der in Verfahrensschritt a) bereitgestellte metallische Behälter in einem auf Verfahrensschritt a) folgenden Verfahrensschritt a1) und vor dem Verfahrensschritt b) auf eine Temperatur von mindestens 23 °C, bevorzugt mindestens 300 °C, besonders bevorzugt mindestens 400 °C, temperiert wird und der metallische Behälter auch während des Verfahrensschritts c), vorzugsweise während der Verfahrensschritte b) und c), auf diese Temperatur temperiert wird. Durch dieses Ausführungsbeispiel kann insbesondere erreicht werden, dass durch die erhöhte Temperatur Druckspannungen in die aufgebrachten Schichten induziert werden, welche den Zugspannungen im Betrieb beziehungsweise der Verwendung des Wasserstoff-Druckbehälters entgegenwirken, als auch eine Defektdichte und -größe in den aufgebrachten Schichten durch die erhöhte Molekülbeweglichkeit während des Aufbringens der Schicht verringert wird.

Weiterhin ist bevorzugt vorgesehen, dass die mindestens eine dehnbare Zwischenschicht mittels eines kapazitiv gekoppelten Hochfrequenz-Plasmas, vorzugsweise Radiofrequenz-Plasmas, abgeschieden wird. Diese Ausführungsform hat insbesondere den Vorteil, dass eine niedrige Fragmentierung der Mischung, insbesondere Gasmischung, des Präkursors resultiert.

Ferner ist bevorzugt vorgesehen, dass die mindestens eine hochdichte Sperrschicht in einem Mikrowellenplasma mit einer elektrischen Verspannung, vorzugsweise unter Einsatz einer kapazitiv gekoppelten Anregung, zwischen metallischem Behälter und einer Hohllanze, welche zur Abscheidung verwendet wird, abgeschieden wird. Hierdurch wird erreicht, dass das Gas, welches zur Beschichtung verwendet wird, durch die elektrische Verspannung höher als im reinen Mikrowellenplasma fragmentiert werden und die erzeugten geladenen Gasmoleküle auf dem Weg zum metallischen Behälter beschleunigt werden, sodass sie auf dem metallischen Behälter mit erhöhter kinetischer Energie auftreffen, weswegen ein besonders inniger Verbund bei geringerer Defektdichte mit dem metallischen Behälter beziehungsweise des auf der Oberfläche des metallischen Behälters aufgebrachten Oxidschicht erzielt wird.

Weiterhin ist bevorzugt vorgesehen, dass der erhaltene Wasserstoff-Druckbehälter mit einer Armierung auf einer Außenseite des Wasserstoff-Druckbehälters, wobei die Außenseite des metallischen Behälters mit der Außenseite des Wasserstoff-Druckbehälters identisch ist, versehen wird, wobei die Armierung aus einer oder mehreren Verbundschichten aus Carbon- und/oder Glasfasern sowie einem Kunststoff besteht. Durch das Vorsehen einer Armierung um den Wasserstoff-Druckbehälter kann zusätzlich zur Festigkeit des Metalls des metallischen Behälters eine erhöhte Festigkeit durch die Armierung erzielt werden, wobei die Armierung durch ihre Ausgestaltung als Carbon- und/oder Glasfaserarmierung zusätzlich ein geringes Gewicht aufweist.

In einer Weiterbildung der Erfindung ist vorgesehen, dass die Oxidschicht gemäß Verfahrensschritt b) und/oder die Diffusions-Sperrschicht gemäß Verfahrensschritt c) eine Oberflächenrauheit Ra unterhalb von 10 nm, vorzugsweise unterhalb von 5 nm, aufweist.

Weiterhin ist bevorzugt vorgesehen, dass die Oxidschicht gemäß Verfahrensschritt b) und/oder die Diffusions-Sperrschicht gemäß Verfahrensschritt c) keine Oberflächendefekte, insbesondere Schmutzpartikel, Poren oder Kratzer, aufweist.

Ferner ist bevorzugt vorgesehen, dass der Wasserstoff-Druckbehälter dazu eingerichtet ist, dass er für eine Verwendung in einem stationären Betrieb oder in einem Fahrzeug mit einem Motor, wie beispielsweise einem Kraftfahrzeug oder einem Lastkraftwagen, geeignet ist.

Die Erfindung betrifft weiterhin einen Wasserstoff-Druckbehälter, hergestellt nach einem Herstellungsverfahren gemäß der vorliegenden Erfindung. Es ergeben sich hierdurch die bereits in Zusammenhang mit dem erfindungsgemäßen Verfahren genannten Vorteile.

Weiterhin betrifft die Erfindung ein Kraftfahrzeug mit einem Wasserstoff-Druckbehälter gemäß der hier vorliegenden Erfindung. Es ergeben sich hierdurch die bereits in Zusammenhang mit dem erfindungsgemäßen Verfahren genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden.

Dazu zeigt:
- Figur 1: in einer schematischen Darstellung eine erste Ausführungsform des vorteilhaften Verfahrens, und
- Figur 2: eine schematische Darstellung eines Ausführungsbeispiels des vorteilhaften Wasserstoff-Druckbehälters.

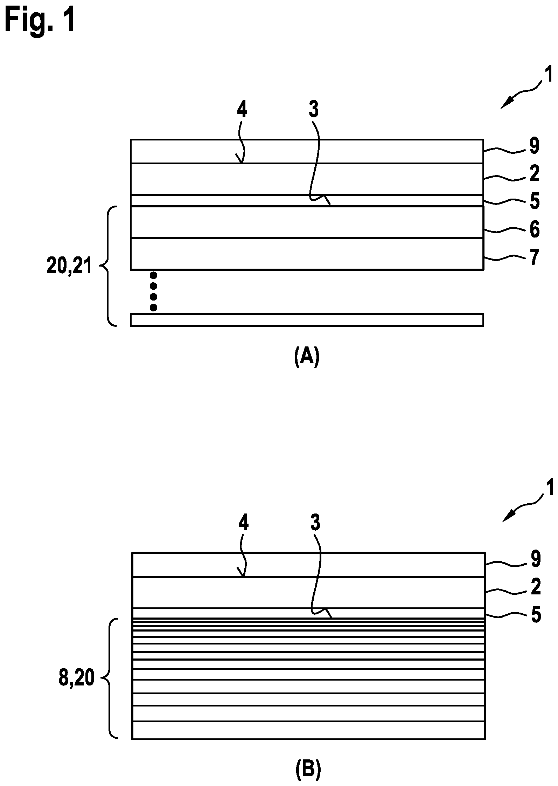

Figur 1 zeigt schematisch den Aufbau eines Wasserstoff-Druckbehälters 1, wobei mit Bezugszeichen 2 ein metallischer Behälter gezeigt ist. Auf der Innenseite 3 des metallischen Behälters 2 wird mittels des vorteilhaften Herstellungsverfahrens eine Oxidschicht 5 aufgebracht. An diese Oxidschicht 5 schließt sich als Diffusions-Sperrschicht 20 entweder ein alternierender Schichtaufbau 21 aus mindestens einer dehnbaren Zwischenschicht 6 und mindestens einer hochdichten Sperrschicht 7 oder eine Gradientenschicht 8 an, wobei die Gradientenschicht 8 einen, vorzugsweise kontinuierlichen, Gradienten von einem dehnbaren Material zu einem hochdichten Material aufweist. Optional weist der metallische Behälter 2 auf einer Außenschicht 4 eine Armierung 9 auf.

Ein Herstellungsverfahren zur Herstellung der Diffusions-Sperrschicht weist folgende Schritte auf:
a) Bereitstellen eines metallischen Behälters 2 mit einer Innenseite 3 und einer Außenseite 4,
b) Ausbilden einer sauerstoffhaltigen Oxidschicht 5 auf der Innenseite 3 des metallischen Behälters 2 mittels Oberflächen-Behandlung mit einem Sauerstoffplasma und/oder mittels Oberflächen-Wärme-Behandlung unter sauerstoffhaltiger Atmosphäre,
c) Beschichten der in Verfahrensschritt b) ausgebildeten Oxidschicht 5 der Innenseite 3 des metallischen Behälters 2 mit einer Diffusions-Sperrschicht 20 in einem Niederdruckverfahren, insbesondere bei einem Druck von 0,1 bis 100 Pa, bevorzugt von 0,1 bis 10 Pa, wobei die in Verfahrensschritt c) durch Beschichtung erhaltene Diffusions-Sperrschicht 20 entweder als ein alternierender Schichtaufbau 21 aus mindestens einer dehnbaren Zwischenschicht 6 und mindestens einer hochdichten Sperrschicht 7 oder als eine Gradientenschicht 8, wobei die Gradientenschicht 8 einen, vorzugsweise kontinuierlichen, Gradienten von einem dehnbaren Material zu einem hochdichten Material aufweist, ausgebildet wird,
   und wobei der metallische Behälter als Prozessreaktor, Gegenelektrode und Substrat in dem Niederdruckverfahren verwendet wird,
d) Erhalt des Wasserstoff-Druckbehälters 1.

Weiterhin ist bevorzugt vorgesehen, dass der Schichtaufbau 21 mit einer hochdichten Sperrschicht 7 beginnt und der Schichtaufbau 21 mit einer hochdichten Sperrschicht 7 endet.

Weiterhin ist bevorzugt vorgesehen, dass zur Beschichtung gemäß Verfahrensschritt c) im Niederdruckverfahren eine Mischung aus Hexamethyldisiloxan (HMDSO) und Sauerstoff verwendet wird, wobei vorzugsweise das Verhältnis von Hexamethyldisiloxan zu Sauerstoff 1 zu 0 bis 1 zu 4 für die dehnbare Zwischenschicht und mindestens 10 zu 1 für die hochdichte Sperrschicht beträgt.

Weiterhin ist bevorzugt vorgesehen, dass der in Verfahrensschritt a) bereitgestellte metallische Behälter 2 in einem auf Verfahrensschritt a) folgenden Verfahrensschritt a1) und vor dem Verfahrensschritt b) auf eine Temperatur von mindestens 23 °C, bevorzugt mindestens 300 °C, besonders bevorzugt mindestens 400 °C, temperiert wird und der metallische Behälter 2 auch während des Verfahrensschritts c), vorzugsweise während der Verfahrensschritte b) und c), auf diese Temperatur temperiert wird.

Weiterhin ist bevorzugt vorgesehen, dass die mindestens eine dehnbare Zwischenschicht 6 mittels eines kapazitiv gekoppelten Hochfrequenz-Plasmas abgeschieden wird.

Weiterhin ist bevorzugt vorgesehen, dass die mindestens eine hochdichte Sperrschicht 7 in einem Mikrowellenplasma mit einer elektrischen Verspannung zwischen metallischen Behälter und einer Hohllanze, welche zur Abscheidung verwendet wird, abgeschieden wird.

Weiterhin ist bevorzugt vorgesehen, dass der erhaltene Wasserstoff-Druckbehälter 1 mit einer Armierung 9 auf einer Außenseite 10 des Wasserstoff-Druckbehälters 1, wobei die Außenseite 3 des metallischen Behälters 2 mit der Außenseite 10 des Wasserstoff-Druckbehälters 1 identisch ist, versehen wird, wobei die Armierung 9 aus einer oder mehreren Verbundschichten aus Carbon- und/oder Glasfasern sowie einem Kunststoff besteht.

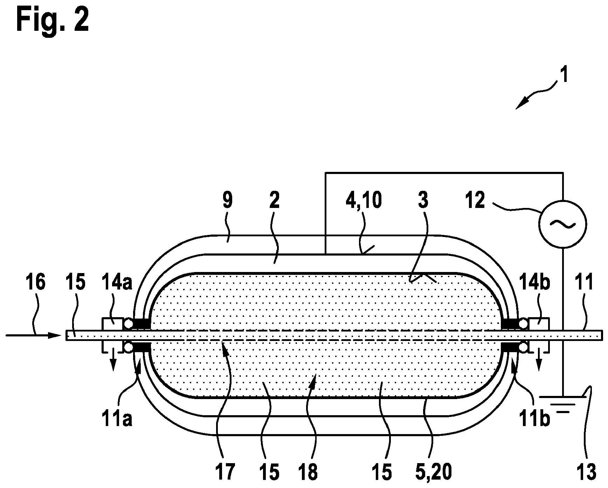

In Figur 2 ist gezeigt, dass die Außenschicht 4 des metallischen Behälters 2 beziehungsweise die Außenschicht 10 des Wasserstoff-Druckbehälters 1 zwei Durchbrechungen 11a, 11b an einer schmalen Seite des metallischen Druckbehälters 2 beziehungsweise des Wasserstoff-Druckbehälters 1 aufweist, wobei eine Hohllanze 11 durch die zwei Durchbrechungen 11a, 11b geführt sind. Ferner ist gezeigt, dass die Hohllanze 11 mit einer Hochfrequenzquelle 12 verbunden ist. Über die Hohllanze 11 ist die Hochfrequenzquelle 12 auch mit einer Erdung 13 verbunden. An den beiden Durchbrechungen 11a, 11b sind zum Verschluss der beiden Durchbrechungen 11a, 11b Ventile 14a und 14b angeordnet, wodurch es möglich ist, zu Beginn des Beschichtungsverfahrens beziehungsweise der Aufbringung der Oxidschicht, ein Vakuum in dem metallischen Behälter 2 beziehungsweise dem Wasserstoff-Druckbehälter 1 zu erzeugen. Alternativ ist es hierzu möglich, dass die Hohllanze 11 nur von einer Seite, das heißt durch entweder die Durchbrechung 11a oder die Durchbrechung 11b, in den metallischen Behälter 2 eingeführt wird und die andere Durchbrechung, das heißt die Durchbrechung 11b oder die Durchbrechung 11a, mittels des dort angeordneten Ventils 14b oder 14a geschlossen wird. In Figur 2 ist die Oxidschicht 5 zusammen mit der Diffusions-Sperrschicht 20 gezeigt.

Durch Durchbrechungen 17 in der Hohllanze 11 ist es möglich, ein Prozessgas 15 möglichst homogen in das Innere, insbesondere in ein Volumen 18, des metallischen Behälters 2 beziehungsweise des Wasserstoff-Druckbehälters 1 einzubringen. Mit dem Pfeil 16 ist eine bevorzugte Fließrichtung des Prozessgases 15 gezeigt.

Ein Vakuum wird vorzugsweise durch eine Vakuumpumpe (in den Figuren nicht gezeigt) im Inneren, beziehungsweise im Volumen 18, des metallischen Behälters 2 beziehungsweise des Wasserstoff-Druckbehälters 1 erzeugt.

Ein Nachweis der vorteilhaften Diffusions-Sperrschicht 20 beziehungsweise der Oxidschicht 5 zusammen mit der Diffusions-Sperrschicht 20 ist an einem fertig hergestellten Wasserstoff-Druckbehälter 1 durch morphologische Analysen mittels Lichtmikroskop, Elektrodenmikroskop oder Atomkraftmikroskop möglich.

## Patentansprüche

1. Verfahren zum Herstellen eines Wasserstoff-Druckbehälters (1), mit den folgenden Schritten:
e) Bereitstellen eines metallischen Behälters (2) mit einer Innenseite (3) und einer Außenseite (4),
f) Ausbildung einer sauerstoffhaltigen Oxidschicht (5) auf der Innenseite (3) des Behälters (2) mittels Oberflächen-Behandlung mit einem Sauerstoffplasma und/oder mittels Oberflächen-Wärme-Behandlung unter sauerstoffhaltiger Atmosphäre,
g) Beschichten der in Verfahrensschritt b) ausgebildeten Oxidschicht (5) der Innenseite (3) des metallischen Behälters (2) mit einer Diffusions-Sperrschicht (20) in einem Niederdruckverfahren, insbesondere bei einem Druck von 0,1 bis 100 Pa, bevorzugt von 0,1 bis 10 Pa,
wobei die in Verfahrensschritt c) durch Beschichtung erhaltene Diffusions-Sperrschicht (20) entweder
- als ein alternierender Schichtaufbau (21) aus mindestens einer dehnbaren Zwischenschicht (6) und mindestens einer hochdichten Sperrschicht (7)
oder
- als eine Gradientenschicht (8), wobei die Gradientenschicht (8) einen, vorzugsweise kontinuierlichen, Gradienten von einem dehnbaren Material zu einem hochdichten Material aufweist, ausgebildet wird,
und wobei der metallische Behälter als Prozessreaktor, Gegenelektrode und Substrat in dem Niederdruckverfahren verwendet wird,
h) Erhalt des Wasserstoff-Druckbehälters (1).

2. Verfahren nach Anspruch 1, **dadurch gekennzeichnet, dass** die mindestens eine dehnbare Zwischenschicht (6) eine Schichtdicke von 10 bis 200 nm, bevorzugt 50 bis 150 nm, besonders bevorzugt 80 bis 120 nm, aufweist.

3. Verfahren nach Anspruch 1 oder 2, **dadurch gekennzeichnet, dass** die mindestens eine hochdichte Sperrschicht (7) eine Schichtdicke von 10 bis 30 nm, bevorzugt 15 bis 25 nm, besonders bevorzugt 18 bis 22 nm, aufweist.

4. Verfahren nach einem der vorhergehenden Ansprüche, **dadurch gekennzeichnet, dass** der Schichtaufbau (21) mit einer hochdichten Sperrschicht (7) beginnt und der Schichtaufbau (21) mit einer hochdichten Sperrschicht (7) endet.

5. Verfahren nach einem der vorhergehenden Ansprüche, **dadurch gekennzeichnet, dass** zur Beschichtung gemäß Verfahrensschritt c) im Niederdruckverfahren, vorzugsweise mittels Hohllanze, eine Mischung aus Hexamethyldisiloxan (HMDSO) und, vorzugsweise molekularem, Sauerstoff verwendet wird, wobei vorzugsweise das Verhältnis von Hexamethyldisiloxan zu Sauerstoff 1 zu 0 bis 1 zu 4 für die dehnbare Zwischenschicht (6) und mindestens 10 zu 1 für die hochdichte Sperrschicht (7) beträgt.

6. Verfahren nach einem der vorhergehenden Ansprüche, **dadurch gekennzeichnet, dass** der in Verfahrensschritt a) bereitgestellte metallische Behälter (2) in einem auf Verfahrensschritt a) folgenden Verfahrensschritt a1) und vor dem Verfahrensschritt b) auf eine Temperatur von mindestens 23 °C, bevorzugt 300 °C, besonders bevorzugt 400 °C, temperiert wird und der metallische Behälter (2) auch während des Verfahrensschritts c), vorzugsweise während der Verfahrensschritte b) und c), auf diese Temperatur temperiert wird.

7. Verfahren nach einem der vorhergehenden Ansprüche, **dadurch gekennzeichnet, dass** die mindestens eine dehnbare Zwischenschicht (6) mittels eines kapazitiv gekoppelten Hochfrequenz- Plasmas abgeschieden wird.

8. Verfahren nach einem der vorhergehenden Ansprüche, **dadurch gekennzeichnet, dass** die mindestens eine hochdichte Sperrschicht (7) in einem Mikrowellenplasma mit einer elektrischen Verspannung zwischen metallischem Behälter und einer Hohllanze, welche zur Abscheidung verwendet wird, abgeschieden wird.

9. Verfahren nach einem der vorhergehenden Ansprüche, **dadurch gekennzeichnet, dass** der erhaltene Wasserstoff-Druckbehälter (1) mit einer Armierung (9) auf einer Außenseite (10) des Wasserstoff-Druckbehälters (1), wobei die Außenseite (4) des metallischen Behälters (2) mit der Außenseite (10) des Wasserstoff-Druckbehälters (1) identisch ist, versehen wird, wobei die Armierung (9) aus einer oder mehreren Verbundschichten aus Carbon- und/oder Glasfasern sowie einem Kunststoff besteht.

10. Wasserstoff-Druckbehälter (1), hergestellt nach einem Herstellungsverfahren gemäß einem oder mehrerer der vorhergehenden Ansprüche.

11. Kraftfahrzeug mit einem Wasserstoff-Druckbehälter (1) nach Anspruch 10.

## Claims

1. Method for producing a hydrogen pressure vessel (1), comprising the following steps:
e) providing a metal vessel (2) with an inner side (3) and an outer side (4),
f) forming an oxygen-containing oxide layer (5) on the inner side (3) of the vessel (2) by means of surface treatment with an oxygen plasma and/or by means of surface heat treatment under an oxygen-containing atmosphere,
g) coating the oxide layer (5) formed in method step
b) on the inner side (3) of the metal vessel (2) with a diffusion barrier layer (20) in a low-pressure method, in particular at a pressure of 0.1 to 100 Pa, preferably 0.1 to 10 Pa,
wherein the diffusion barrier layer (20) obtained by coating in method step c) is in the form either
- of an alternating layer structure (21) of at least one extensible intermediate layer (6) and at least one high-density barrier layer (7)
or
- of a gradient layer (8), wherein the gradient layer (8) has a preferably continuous gradient from an extensible material to a high-density material,
and wherein the metal vessel is used as process reactor, counter-electrode and substrate in the low-pressure method,
h) obtaining the hydrogen pressure vessel (1).

2. Method according to Claim 1, **characterized in that** the at least one extensible intermediate layer (6) has a layer thickness of 10 to 200 nm, preferably 50 to 150 nm, particularly preferably 80 to 120 nm.

3. Method according to Claim 1 or 2, **characterized in that** the at least one high-density barrier layer (7) has a layer thickness of 10 to 30 nm, preferably 15 to 25 nm, particularly preferably 18 to 22 nm.

4. Method according to one of the preceding claims, **characterized in that** the layer structure (21) starts with a high-density barrier layer (7) and the layer structure (21) ends with a high-density barrier layer (7) .

5. Method according to one of the preceding claims, **characterized in that,** for the coating according to method step c) in the low-pressure method, preferably by means of a hollow lance, use is made of a mixture of hexamethyldisiloxane (HMDSO) and preferably molecular oxygen, wherein preferably the ratio of hexamethyldisiloxane to oxygen is 1:0 to 1:4 for the extensible intermediate layer (6) and at least 10:1 for the high-density barrier layer (7).

6. Method according to one of the preceding claims, **characterized in that** the temperature of the metal vessel (2) provided in method step a) is controlled to a temperature of at least 23°C, preferably 300°C, particularly preferably 400°C, in a method step a1) that follows method step a) and prior to method step b), and the temperature of the metal vessel (2) is also controlled to this temperature during method step c), preferably during method steps b) and c).

7. Method according to one of the preceding claims, **characterized in that** the at least one extensible intermediate layer (6) is deposited by means of a capacitively coupled high-frequency plasma.

8. Method according to one of the preceding claims, **characterized in that** the at least one high-density barrier layer (7) is deposited in a microwave plasma with an electrical preload between the metal vessel and a hollow lance used for the deposition.

9. Method according to one of the preceding claims, **characterized in that** the hydrogen pressure vessel (1) obtained is provided with a reinforcement (9) on an outer side (10) of the hydrogen pressure vessel (1), wherein the outer side (4) of the metal vessel (2) is identical to the outer side (10) of the hydrogen pressure vessel (1), wherein the reinforcement (9) consists of one or more composite layers of carbon fibres and/or glass fibres and a plastic.

10. Hydrogen pressure vessel (1), produced by a production method according to one or more of the preceding claims.

11. Motor vehicle comprising a hydrogen pressure vessel (1) according to Claim 10.

## Revendications

1. Procédé de fabrication d'un réservoir d'hydrogène sous pression (1), comprenant les étapes suivantes :
e) la fourniture d'un réservoir métallique (2) ayant un côté intérieur (3) et un côté extérieur (4),
f) la formation d'une couche d'oxyde contenant de l'oxygène (5) sur le côté intérieur (3) du réservoir (2) au moyen d'un traitement de surface avec un plasma d'oxygène et/ou au moyen d'un traitement thermique de surface sous atmosphère contenant de l'oxygène,
g) le revêtement de la couche d'oxyde (5) formée dans l'étape de procédé b) du côté intérieur (3) du réservoir métallique (2) avec une couche de blocage de diffusion (20) dans un procédé à basse pression, notamment à une pression de 0,1 à 100 Pa, de préférence de 0,1 à 10 Pa, la couche de blocage de diffusion (20) obtenue par revêtement dans l'étape de procédé c) étant formée soit
- sous la forme d'une structure de couches alternées (21) composée d'au moins une couche intermédiaire extensible (6) et d'au moins une couche de blocage à haute densité (7),
soit
- sous la forme d'une couche à gradient (8), la couche à gradient (8) présentant un gradient, de préférence continu, d'un matériau extensible à un matériau à haute densité,
et le réservoir métallique étant utilisé en tant que réacteur de processus, contre-électrode et substrat dans le procédé à basse pression,
h) l'obtention du réservoir d'hydrogène sous pression (1) .

2. Procédé selon la revendication 1, **caractérisé en ce que** l'au moins une couche intermédiaire extensible (6) présente une épaisseur de couche de 10 à 200 nm, de préférence de 50 à 150 nm, de manière particulièrement préférée de 80 à 120 nm.

3. Procédé selon la revendication 1 ou 2, **caractérisé en ce que** l'au moins une couche de blocage à haute densité (7) présente une épaisseur de couche de 10 à 30 nm, de préférence de 15 à 25 nm, de manière particulièrement préférée de 18 à 22 nm.

4. Procédé selon l'une quelconque des revendications précédentes, **caractérisé en ce que** la structure de couches (21) commence par une couche de blocage à haute densité (7) et la structure de couches (21) se termine par une couche de blocage à haute densité (7).

5. Procédé selon l'une quelconque des revendications précédentes, **caractérisé en ce que,** pour le revêtement selon l'étape de procédé c), on utilise dans le procédé à basse pression, de préférence au moyen d'une lance creuse, un mélange d'hexaméthyldisiloxane (HMDSO) et d'oxygène, de préférence moléculaire, le rapport entre l'hexaméthyldisiloxane et l'oxygène étant de préférence de 1 sur 0 à 1 sur 4 pour la couche intermédiaire extensible (6) et d'au moins 10 sur 1 pour la couche de blocage à haute densité (7).

6. Procédé selon l'une quelconque des revendications précédentes, **caractérisé en ce que** le réservoir métallique (2) fourni dans l'étape de procédé a) est thermorégulé à une température d'au moins 23 °C, de préférence 300 °C, de manière particulièrement préférée 400 °C, dans une étape de procédé a1) suivant l'étape de procédé a) et avant l'étape de procédé b), et le réservoir métallique (2) est également thermorégulé à cette température pendant l'étape de procédé c), de préférence pendant les étapes de procédé b) et c).

7. Procédé selon l'une quelconque des revendications précédentes, **caractérisé en ce que** l'au moins une couche intermédiaire extensible (6) est déposée au moyen d'un plasma à haute fréquence couplé de manière capacitive.

8. Procédé selon l'une quelconque des revendications précédentes, **caractérisé en ce que** l'au moins une couche de blocage à haute densité (7) est déposée dans un plasma micro-ondes avec une tension électrique entre le réservoir métallique et une lance creuse utilisée pour le dépôt.

9. Procédé selon l'une quelconque des revendications précédentes, **caractérisé en ce que** le réservoir d'hydrogène sous pression (1) obtenu est pourvu d'une armature (9) sur un côté extérieur (10) du réservoir d'hydrogène sous pression (1), le côté extérieur (4) du réservoir métallique (2) étant identique au côté extérieur (10) du réservoir d'hydrogène sous pression (1), l'armature (9) étant constituée d'une ou plusieurs couches composites de fibres de carbone et/ou de verre ainsi que d'une matière plastique.

10. Réservoir d'hydrogène sous pression (1) fabriqué par un procédé de fabrication selon une ou plusieurs des revendications précédentes.

11. Véhicule automobile avec un réservoir d'hydrogène sous pression (1) selon la revendication 10.
